# FASCICULE DE BREVET EUROPEEN

(11) **EP 1 426 231 B1**
(45) Date de publication et mention de la délivrance du brevet: **02.11.2005**
(21) Numéro de dépôt: 03370034.5
(22) Date de dépôt: 23.09.2003
(51) Int. Cl.: B60N 2/36, B60R 21/02

(54) **Banquette repliable de securite**
Faltbare Sicherheitsbank
Foldable safety bench

(30) Priorité: 04.12.2002 FR 0215299
(43) Date de publication de la demande: 09.06.2004
(73) Titulaire: Durisotti, S.A., 62430 Sallaumines (FR)
(72) Inventeur: Wallart, Xavier, 59211 Santes (FR)
(74) Mandataire: Hennion, Jean-Claude

(56) Documents cités:
- WO-A-00/21782
- FR-A- 2 632 580
- FR-A- 2 663 270
- FR-A- 2 668 990
- FR-A- 2 725 669

## Description

L'invention se rapporte à une banquette repliable de sécurité.

Les véhicules dits utilitaires comportent généralement une rangée de sièges à l'avant et, accessoirement, une ou plusieurs rangées de sièges à l'arrière.

Lorsqu'une deuxième rangée de sièges est montée, cela pénalise le chargement que ces sièges soient occupés ou non.

Certes, il existe des véhicules dont les sièges arrière ou la banquette peuvent être démontés mais il est également connu de proposer aux utilisateurs d'équiper des véhicules livrés à l'origine sans siège d'un système assurant une meilleure fonctionnalité et, notamment, de disposer momentanément de sièges supplémentaires.

On connaît, par exemple, une banquette repliable (FR-A-2.663.270) qui peut occuper une première position suivant laquelle les assises de la banquette sont utilisables pour des passagers et une deuxième position selon laquelle la banquette est avancée vers l'avant du véhicule pour ne former qu'un rideau de protection pour les passagers et n'occuper qu'une place restreinte.

Cette banquette repliable est constituée à la manière d'un rideau, en trois parties articulées horizontalement.

Ce rideau est articulé tant en son extrémité supérieure qu'en son extrémité inférieure sur des axes fixes et des éléments télescopiques permettent le passage entre les deux positions stables du système.

Ce dispositif offre une certaine sécurité en ce sens qu'il empêche les matériaux situés à l'arrière du véhicule de percuter le chauffeur et les passagers.

Toutefois, il ne peut recevoir de ceintures de sécurité.

La présence de ceinture de sécurité est un élément important dans la sauvegarde des passagers.

Lors de la conception des véhicules livrés avec des sièges sur plusieurs rangées, les points d'ancrage de ces ceintures sont prévus à l'origine mais, sur ces véhicules utilitaires que l'on modifie par ajout d'une banquette pliable, de tels points d'ancrage ne sont pas prévus.

On connaît également du document FR-A-2.725.669 un siège escamotable à dossier mobile.

Le siège peut être placé d'une position utilisable pour un passager à une position de rangement à l'aide de bielles articulées disposées au niveau du plancher du véhicule.

Toutefois, dans ce document, l'assise du siège est disposée nécessairement au niveau du plancher en position de rangement et d'utilisation nécessitant un plancher comportant un évidement.

Ce siège ne peut donc être adapté à la plupart des véhicules notamment utilitaires ; de plus, la structure du siège, dont l'assise est positionnée au niveau du plancher, ne permet pas non plus le réglage de la hauteur entre le plancher au niveau des pieds du passager et l'assise.

L'invention se propose d'apporter une solution aux problèmes notamment évoqués plus haut.

A cet effet, l'invention se rapporte à une banquette destinée à équiper un véhicule, cette banquette formant un rideau mobile entre une première position dite position utile où la banquette présente une assise horizontale et une deuxième position où, d'une part, l'assise, repliée sensiblement parallèlement au dos du siège, n'est plus disponible et, d'autre part, ce rideau mobile est avancé en direction de l'avant du véhicule (Banquette du type divulguée dans FR-A- 2 663 270), cette banquette étant caractérisée en ce que :
- l'assise est portée par une structure rigide résistante formée de montants et de traverses occupant la quasi section du véhicule, cette structure étant montée coulissante en partie supérieure selon une direction parallèle à l'axe longitudinal du véhicule et,
- en position utile, le rideau mobile se verrouille en partie basse et haute sur des structures dites d'arrimage disposées transversalement à l'axe de déplacement du rideau, ces structures d'arrimage étant ancrées sur l'ossature du véhicule.

L'invention sera bien comprise à l'aide de la description ci-après faite à titre d'exemple non limitatif en regard du dessin qui représente schématiquement :

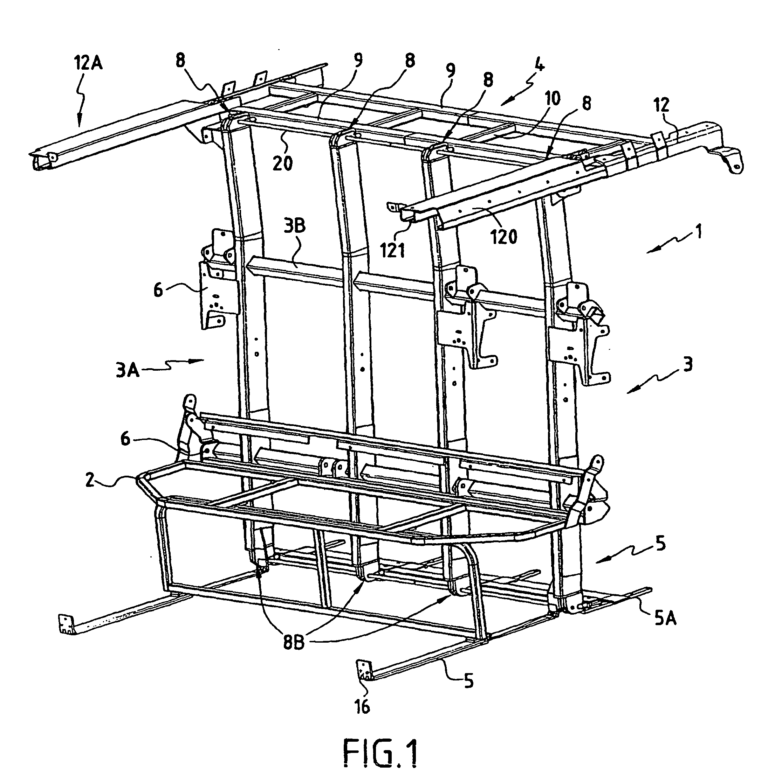

- figure 1 : vue axonométrique d'une banquette,

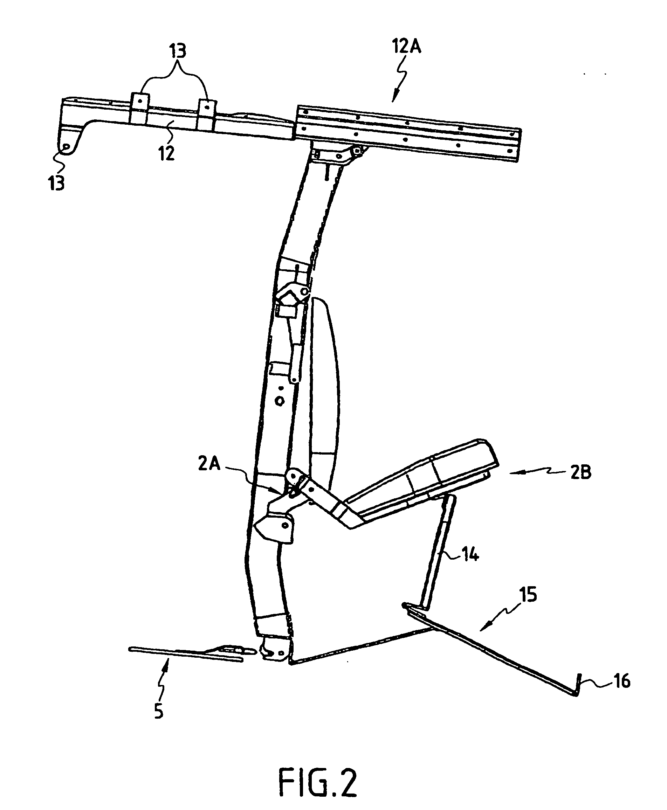

- figure 2 : vue latérale d'une banquette,

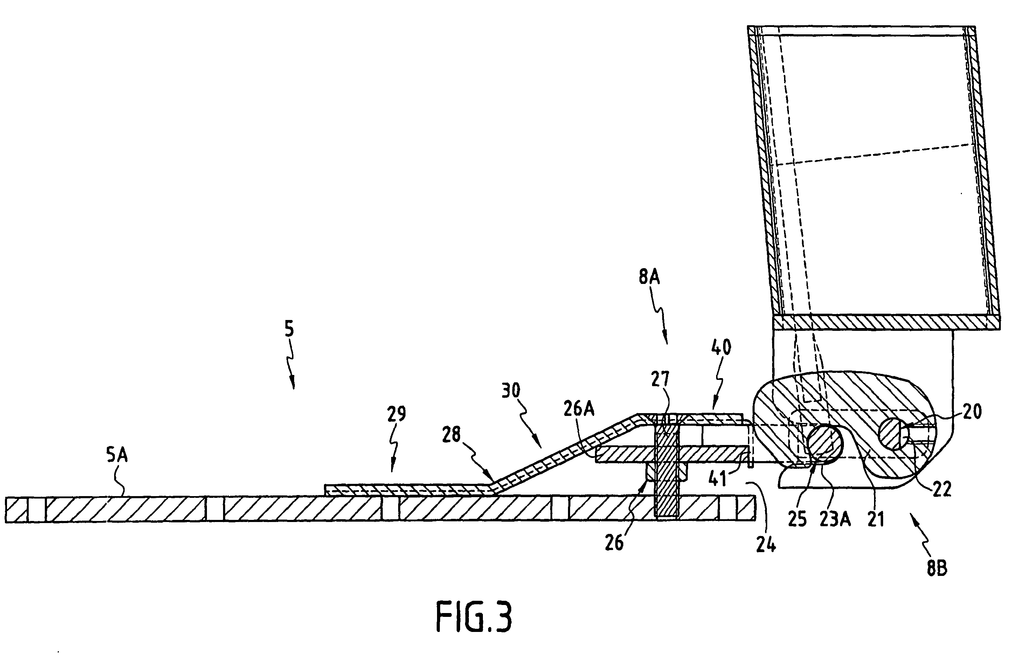

- figure 3 : vue en coupe d'un moyen de verrouillage,

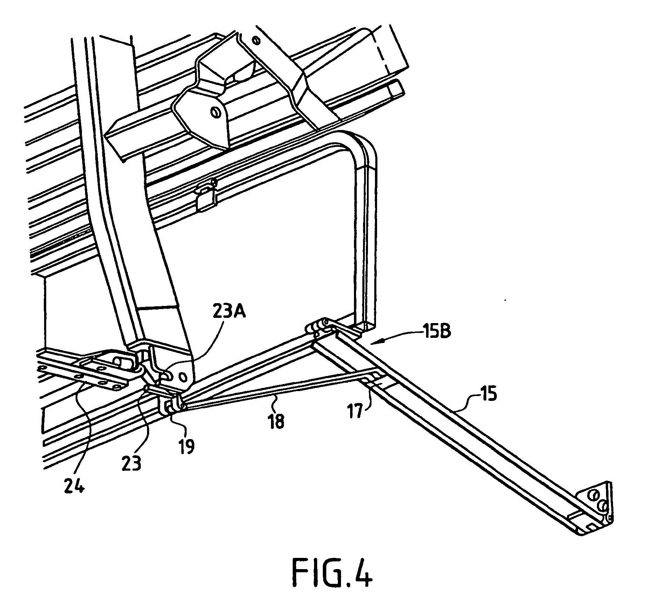

- figure 4 : détail de la figure 2 selon un autre angle.

En se reportant au dessin, on voit une banquette 1 repliable destinée à être installée dans un véhicule notamment utilitaire.

Cette banquette est destinée à recevoir trois passagers mais elle pourrait bien évidemment en accueillir un nombre différent.

Pour chaque passager, est prévue une ceinture de sécurité.

Cette banquette forme un rideau mobile entre une première position dite position utile où la banquette présente une assise 2 horizontale et une deuxième position où, d'une part, l'assise 2 n'est plus disponible et, d'autre part, ce rideau mobile est avancé en direction de l'avant du véhicule.

Cette banquette 1 et la structure 3 associée qui porte l'assise de celle-ci s'étendent de bas en haut du volume dans lequel elles sont installées.

Cet ensemble évite notamment que, lors d'un freinage brusque, les objets installés à l'arrière du véhicule ne percutent le dos des passagers et, notamment, la tête de ceux-ci.

Comme on peut le voir :
- l'assise 2 est portée par une structure 3 rigide résistante formée de montants 3A et de traverses 3B occupant la quasi section du véhicule, cette structure étant montée coulissante en partie supérieure selon une direction parallèle à l'axe longitudinal du véhicule et
- en position utile, le rideau mobile se verrouille en partie basse et haute sur des structures 4,5 dites d'arrimage disposées transversalement, ces structures d'arrimage étant ancrées sur l'ossature du véhicule.

Selon une caractéristique de l'invention, cette structure rigide a des dimensions géométriques fixes, c'est-à-dire ne présente pas d'éléments télescopiques.

Cette structure ne se déforme qu'au delà d'une valeur de charge prédéterminée.

Les ceintures de sécurité s'accrochent sur cette structure rigide.

Pour obtenir une meilleure résistance, les montants 3A ne sont pas nécessairement rectilignes mais chaque montant peut être constitué d'un tronçon A central situé entre deux tronçons B externes inclinés vers l'avant par rapport à ce tronçon central A ou encore d'un tronçon principal et d'un ou deux tronçons inclinés vers l'avant.

Les zones d'appui 6 pour l'accrochage des enrouleurs des ceintures sont ancrées à la fois sur le montant et sur la traverse.

Les zones d'appui 6 pour l'accrochage des parties basses des ceintures sont fixées sur une autre traverse située à un niveau inférieur de la structure rigide.

Une traverse supplémentaire peut parfois être utilisée pour renforcer l'ancrage des zones d'appui des parties basses des ceintures.

En position utile, cette structure rigide est verrouillée au moyen de plusieurs verrous localisés au long de l'axe longitudinal des structures 4,5 d'arrimage afin de répartir les efforts.

On note que ces verrous sont situés à l'emplacement des montants.

La structure 4 d'arrimage supérieure est constituée de deux longerons 9 reliés par des traverses 10 formant une échelle 11 qui, mise en place, se trouve dans un plan parallèle au plan du plancher.

L'une des extrémités de cette échelle peut comporter des moyens de réglage en longueur de celle-ci tels des tubes emboîtés et verrouillés.

Les extrémités de cette échelle sont fixées sur des membrures 12 parallèles aux traverses.

Ces membrures 12, d'une part, servent à la fixation sur l'ossature du véhicule et, d'autre part, portent un rail 12A sur lequel coulisse la structure rigide.

Cette structure d'arrimage supérieure procure la résistance nécessaire et la rigidité suffisante à la partie supérieure du véhicule qui, généralement, est une simple tôle.

Les pattes 13 (forme et emplacement) pour la fixation au véhicule que présentent ces membrures 12 dépendent du type de véhicule.

C'est au niveau des traverses de l'échelle que se situe une fraction 8A des verrous 8, ceux-ci étant constitués d'une partie 8A sur la structure d'arrimage et une partie 8B sur la structure rigide mobile.

La structure 5 d'arrimage inférieure est une pièce qui s'étend transversalement sur toute la largeur du véhicule.

Elle est fixée en plusieurs points sur le plancher du véhicule.

Ces fixations 5A se trouvent notamment au niveau des pieds des montants.

On décrira plus en détail, ultérieurement, les verrous 8, ceux-ci présentant des caractéristiques qui ne sont pas strictement limitées à la structure décrite.

L'assise 2 de la banquette doit pouvoir se replier pour occuper le moins de place possible en position avancée du rideau.

Il pourrait s'agir d'une simple assise basculant vers le haut manuellement. Cependant, il est prévu que cette assise se bascule automatiquement lors du déplacement vers l'avant de cette banquette.

A cet effet, cette assise 2 est articulée en son bord arrière 2A sur la structure 3 rigide tandis que la partie avant 2B est articulée sur une structure 14 d'appui verticale, la base de cette structure 14 d'appui étant elle-même articulée sur des profilés 15 s'étendant vers l'avant de la banquette et dont l'extrémité distale 15A est fixée sur la structure du véhicule au moyen d'une charnière 16.

En position utile, les profilés 15 sont parallèles au plancher.

Lorsqu'on avance la structure rigide, le bord avant de l'assise se soulève pour que progressivement l'assise devienne parallèle au dos du siège qui est fixé sur la structure rigide.

Pour parfaire le mouvement, on voit que le profilé 15 reçoit, en sa partie 15B arrière, un coulisseau 17 articulé sur une pièce 18 longiligne articulée elle-même sur l'arrière au moyen d'une charnière 19 fixée sur la base de la structure rigide.

Cette pièce 18 longiligne supplémentaire contraint la structure d'appui vertical à se maintenir également dans un plan sensiblement vertical.

Les verrous sont commandés par une transmission 20 commune.

Chaque verrou 8 comprend :
- un pêne 21 à crochet qui, articulé sur un axe horizontal 22, se déplace entre deux flasques 23 fixes dont la face tournée vers la gâche est échancrée et
- une gâche 24 formée par un fil 25 déformé en U.

Les échancrures 23A des flasques 23 permettent au fil de la gâche de s'engager au delà de la face avant des dites flasques.

Pour les verrous de la partie supérieure, les fils de gâche pourront être soudés ou boulonnés sur cette structure.

Cependant, avantageusement, la gâche est portée par un moyen 26 de réglage en hauteur par rapport au plan d'appui de la pièce qui la porte qui est la structure d'arrimage.

C'est un point important, notamment, pour les verrous de la structure d'arrimage inférieure.

En effet, les tolérances de fabrication des véhicules font que celles-ci peuvent conduire à des écarts ne permettant plus d'engager les gâches.

Ces écarts sont moins perceptibles sur les verrous du haut car la structure rigide est sensiblement suspendue à la structure d'arrimage supérieure au moyen du système de guidage en translation et, de ce fait, il existe un positionnement relatif.

Par contre, la structure d'arrimage inférieure est indépendante ce qui peut conduire à ces problèmes.

Pour la structure d'arrimage inférieure, chaque fil de gâche est porté par un support 26A mobile par rapport à la structure d'arrimage.

Une vis 27 de réglage permet de déplacer verticalement ce fil de gâche.

La structure d'arrimage est une pièce supérieure 28 fixée sur des barres de fixation 5A comprenant :
- une partie plane 29,
- une partie 30 qui s'élève et qui se prolonge ensuite par une deuxième partie plane 40 avec un rebord 41 vertical orienté vers le bas.

Le rebord vertical est échancré pour le passage des fils de gâche.

Comme on peut le voir, la vis de réglage s'ancre dans la barre de fixation 5A en appui sur le plancher et traverse la pièce supérieure. Le filetage permet de régler la hauteur du fil de gâche.

En position avancée, la structure 3 est verrouillée en cette position par des taquets.

Comme il l'a été indiqué précédemment, la structure rigide coulisse sur un rail.

Le rail est porté par la membrure 12 qui se fixe sur la carrosserie.

Des galets répartis dans les plans assurent le guidage de la structure.

Le rail est constitué de deux pièces 120, 121 pliées. L'une des pièces forme le haut d'un rail en C et se prolonge par un voile latéral qui est destiné à être fixé sur la carrosserie. L'autre pièce forme la paroi inférieure et latérale extérieure du profilé en C.

## Revendications

1. Banquette destinée à équiper un véhicule, cette banquette formant un rideau mobile entre une première position dite position utile où la banquette présente une assise (2) horizontale et une deuxième position où, d'une part, l'assise (2), repliée sensiblement parallèlement au dos du siège, n'est plus disponible et, d'autre part, ce rideau mobile est avancé en direction de l'avant du véhicule,
cette banquette étant **CARACTERISEE en ce que** :
- l'assise (2) est portée par une structure (3) rigide résistante formée de montants (3A) et de traverses (3B) occupant la quasi section du véhicule, cette structure étant montée coulissante en partie supérieure selon une direction parallèle à l'axe longitudinal du véhicule et
- en position utile, le rideau mobile se verrouille en partie basse et haute sur des structures (4,5) dites d'arrimage disposées transversalement, ces structures d'arrimage étant ancrées sur l'ossature du véhicule.

2. Banquette selon la revendication 1 **caractérisée en ce que** chaque montant est constitué d'un tronçon (A) principal avec au moins un tronçon (B) externe incliné vers l'avant par rapport à ce tronçon principal (A).

3. Banquette selon la revendication 1 **caractérisée en ce que** les zones d'appui (6) pour l'accrochage des enrouleurs des ceintures sont ancrées à la fois sur un montant et sur une traverse.

4. Banquette selon la revendication 1 **caractérisée en ce que** la structure rigide est verrouillée au moyen de plusieurs verrous (8) localisés au long de l'axe longitudinal des structures (4,5) d'arrimage.

5. Banquette selon la revendication 4 **caractérisée en ce que** les verrous (8) sont situés à l'emplacement des montants.

6. Banquette selon la revendication 5 **caractérisée en ce que** chaque verrou (8) comprend :
- un pêne (21) à crochet qui, articulé sur un axe horizontal (22), se déplace entre deux flasques (23) fixes dont la face tournée vers la gâche est échancrée et,
- une gâche (24) formée par un fil (25) déformé en U.

7. Banquette selon la revendication 6 **caractérisée en ce que** la gâche est portée par un moyen (26) de réglage en hauteur par rapport au plan d'appui de la pièce qui la porte qui est la structure d'arrimage.

8. Banquette selon la revendication 7 **caractérisée en ce que** chaque fil de gâche est porté par un support mobile par rapport à la structure d'arrimage.

9. Banquette selon la revendication 1 **caractérisée en ce que** la structure (4) d'arrimage supérieure est constituée de deux longerons (9) reliés par des traverses (10) formant une échelle (11) qui, mise en place, se trouve dans un plan parallèle au plan du plancher.

10. Banquette selon la revendication 1 **caractérisée en ce que** :
- la structure (5) d'arrimage inférieure est une pièce qui s'étend transversalement sur toute la largeur du véhicule,
- elle est fixée en plusieurs points sur le plancher du véhicule et,
- les fixations (5A) se trouvent au niveau des pieds des montants.

11. Banquette selon la revendication 1 **caractérisée en ce que** l'assise (2) est articulée en son bord arrière (2A) sur la structure (3) rigide tandis que la partie avant (2B) est articulée sur une structure (14) d'appui verticale, la base de cette structure (14) d'appui étant elle-même articulée sur des profilés (15) s'étendant vers l'avant de la banquette et dont l'extrémité distale (15A) est fixée sur la structure du véhicule au moyen d'une charnière (16).

12. Banquette selon la revendication 11 **caractérisée en ce que** le profilé (15) reçoit, en sa partie (15B) arrière, un coulisseau (17) articulé sur une pièce (18) longiligne articulée elle-même sur l'arrière au moyen d'une charnière (19) fixée sur la base de la structure rigide.

## Patentansprüche

1. Bank, vorgesehen, um ein Fahrzeug auszurüsten, wobei diese Bank einen Vorhang bildet, der zwischen einer ersten Nutzposition genannten Position, wo die Bank einen horizontalen Sitz (2) aufweist, und einer zweiten Position, wo einerseits der Sitz (2), im wesentlichen parallel zur Lehne des Sitzes zusammengeklappt, nicht mehr verfügbar ist, und andererseits dieser bewegliche Vorhang in Richtung der Vorderseite des Fahrzeugs vorgerückt ist, beweglich ist,
wobei diese Bank **dadurch gekennzeichnet ist, daß**
- der Sitz (2) durch eine starre beständige Struktur (3) getragen ist, die aus Stützen (3A) und Querträgern (3B) gebildet ist, die einen Quasiabschnitt des Fahrzeugs belegen, wobei diese Struktur verschiebbar im oberen Teil gemäß einer Richtung parallel zur Längsachse des Fahrzeuges angebracht ist und
- in Nutzposition der mobile Vorhang sich im unteren Teil und oberen Teil auf den Strukturen (4, 5), die quer angeordnete Nutzlastbefestigungen genannt werden, verriegelt, wobei diese Nutzlastbefestigungsstrukturen auf der Tragkonstruktion des Fahrzeugs verankert sind.

2. Bank nach Anspruch 1, **dadurch gekennzeichnet, daß** jede Stütze aus einem Hauptteilstück (A) mit wenigstens einem äußeren Teilstück (B) gebildet ist, das nach vorne im Verhältnis zu diesem Hauptteilstück (A) geneigt ist.

3. Bank nach Anspruch 1, **dadurch gekennzeichnet, daß** die Stützzonen (6) zum Aufhängen der Aufroller der Gurte gleichzeitig auf einer Stütze und einem Querträger verankert sind.

4. Bank nach Anspruch 1, **dadurch gekennzeichnet, daß** die starre Struktur mittels mehrerer Riegel (8) gesichert ist, die entlang der Längsachse der Nutzlastbefestigungsstrukturen (4, 5) angeordnet sind.

5. Bank nach Anspruch 4, **dadurch gekennzeichnet, daß** die Verriegelungen (8) am Ort der Säulen angeordnet sind.

6. Bank nach Anspruch 5, **dadurch gekennzeichnet, daß** jeder Riegel (8) umfaßt:
- einen Hakenriegel (21), der gelenkig auf seiner Horizontalachse (22) sich zwischen zwei festen Flanschen (23) bewegt, von denen die zum Streichblech hingedrehte Seite ausgebogen ist und
- eine Betätigungsgabel (24), gebildet durch einen U-förmig gebogenen Draht (25).

7. Bank nach Anspruch 6, **dadurch gekennzeichnet, daß** die Betätigungsgabel auf einem Mittel (26) zur Höhenregelung im Verhältnis zur Stützebene des Stückes getragen ist, das sie trägt, was die Nutzlastbefestigungsstruktur ist.

8. Bank nach Anspruch 7, **dadurch gekennzeichnet, daß** jeder Betätigungsgabeldraht durch einen im Verhältnis zur Nutzlastbefestigungsstruktur beweglichen Träger getragen ist.

9. Bank nach Anspruch 1, **dadurch gekennzeichnet, daß** die obere Nutzlastbefestigungsstruktur (4) aus zwei Läufern (9) besteht, die mit den Querträgern (10) verbunden sind, die eine Leiter (11) geben, die plaziert sich in einer Ebene parallel zur Ebene des Bodens befindet.

10. Bank nach Anspruch 1, **dadurch gekennzeichnet, daß**:
- die untere Nutzlastbefestigungsstruktur (5) ein Stück ist, das sich quer über die Gesamtlänge des Fahrzeugs erstreckt,
- sie an mehreren Punkten des Fahrzeugbodens fixiert ist und
- die Fixierungen (5) sich auf dem Niveau der Füße der Stützen befinden.

11. Bank nach Anspruch 1, **dadurch gekennzeichnet, daß** der Sitz (2) an seiner Hinterseite (2A) der starren Struktur (3) gelenkig ist, während der Vorderteil (2B) auf einer vertikalen Stützstruktur (14) angelenkt ist, wobei der Fuß dieser Stützstrukturen (14) selbst auf Profilen (15) angelenkt ist, die sich zum Vorderen der Bank hin erstrecken und deren distales Ende (15A) auf der Struktur des Fahrzeugs mittels eines Scharniers (16) fixiert ist.

12. Bank nach Anspruch 11, **dadurch gekennzeichnet, daß** das Profil (15) in seinem hinteren Teil (15B) einen Schieber (17) aufnimmt, der auf einem länglichen Stück (18) angelenkt ist, das selbst nach hinten mittels eines Scharniers (19) angelenkt ist, welches am Fuß der starren Struktur fixiert ist.

## Claims

1. Bench seat intended to equip a vehicle, this bench seat forming a movable screen between a first position, called the working position in which the seat (2) of the bench is horizontal, and a second position in which, on the one hand, the seat (2), folded more of less parallel to the squab, is no longer available and, on the other hand, this movable screen is moved forward towards the front of the vehicle, this bench seat being **characterised in that**:
- the seat (2) is borne by a strong rigid structure (3) formed of posts (3A) and cross members (3B) taking up the quasi-section of the vehicle, this structure being fitted so that it can slide at the top in a direction parallel to the longitudinal centreline of the vehicle, and
- in the working position, the movable screen is locked at the bottom and top to structures (4, 5), called stowage structures arranged transversely, these stowage structures being anchored to the frame of the vehicle.

2. Bench seat according to Claim 1, **characterised in that** each post is made up of a main piece (A) with at least one outer piece (B) angled towards the front in relation to this main piece (A).

3. Bench seat according to Claim 1, **characterised in that** the supporting areas (6) for hooking on the safety belt winders are anchored both to a post and to a cross member.

4. Bench seat according to Claim 1, **characterised in that** the rigid structure is locked by means of several lock-bolts (8) located along the longitudinal centreline of the stowage structures (4, 5).

5. Bench seat according to Claim 4, **characterised in that** the lock-bolts (8) are situated where the posts are located.

6. Bench seat according to Claim 5, **characterised in that** each lock-bolt (8) includes:
- a hook-type bolt (21) which, hinged to a horizontal pin (22), moves between two fixed flanges (23) with the face turned towards the bolt clasp channelled, and
- a bolt clasp (24) formed by a wire (25) deformed into a U-shape.

7. Bench seat according to Claim 6, **characterised in that** the bolt clasp is borne by a means (26) of adjusting height in relation to the plane supporting the component which carries it, which is the stowage structure.

8. Bench seat according to Claim 7, **characterised in that** each bolt clasp wire is borne by a support which can move in relation to the stowage structure.

9. Bench seat according to Claim 1, **characterised in that** the upper stowage structure (4) is made of two longitudinal members (9) connected by cross members (10) forming a ladder (11) which, once in place, is in a plane parallel to the plane of the floor.

10. Bench seat according to Claim 1, **characterised in that**:
- the lower stowage structure (5) is a component which extends transversely over the full width of the vehicle,
- it is fixed at several points to the vehicle floor, and
- the fasteners (5A) are at the level of the foot ends of the posts.

11. Bench seat according to Claim 1, **characterised in that** the seat (2) is hinged at its rear edge (2A) to the rigid structure (3) while the front part (2B) is hinged to a vertical support structure (14), the base of this supporting structure (14) being itself hinged to sections (15) extending towards the front of the bench seat and with the distal end (15A) fixed to the structure of the vehicle by means of a hinge (16).

12. Bench seat according to Claim 11, **characterised in that** in its rear part (15B) the section (15) takes a slide (17) hinged to a long-line component (18), itself hinged to the rear by means of a hinge (19) fixed to the base of the rigid structure.
